# EUROPEAN PATENT APPLICATION

(11) **EP 1 650 232 A1**
(43) Date of publication of application: **26.04.2006**
(21) Application number: 04105286.1
(22) Date of filing: 25.10.2004
(51) Int. Cl.: C08F 10/00, C08F 4/64

(54) **LDPE-Like polymers with bisindenyl-based ligands having different rings**

(71) Applicant: TOTAL PETROCHEMICALS RESEARCH FELUY, 7181 Seneffe (Feluy) (BE)
(72) Inventor: Razavi, Abbas, B-7000, Mons (BE)

(57) **Abstract**

The present invention discloses a catalyst system that comprises several bridged pseudo-bisindenyl components that are structurally different in order to prepare polymers having a broad molecular weight distribution.

## Description

The present invention discloses metallocene catalyst sytems comprising several types of indenyl or pseudo-indenyl catalyst components. It also discloses their use in the polymerisation of alpha-olefins.

In many applications in which polyolefins are employed, it is desirable that the polyolefin used has good mechanical properties. It is known that, in general, high molecular weight polyolefins have good mechanical properties. Additionally, since the polyolefin must usually undergo some form of processing, such as moulding processes and extrusion processes and the like, to form the final product, it is also desirable that the polyolefin used has good processing properties. However, unlike the mechanical properties of the polyolefin, its processing properties tend to improve as its molecular weight decreases.

Polymers having good optical properties, such as high transparency combined with good processing were typically low density polyethylene (LDPE) resins prepared by radical initiated polymerisation reaction. These polymers were prepared under severe conditions of very high pressure, typically larger than 1000 bars and up to 3000 bars, and of high temperature, typically larger than 200 °C. This process was not environmentally friendly as it released unconsumed monomers into the atmosphere. The polymer exiting the reactor was in a molten state and included monomers that were subsequently released in the environment. In addition, the products did not have excellent mechanical properties. It was also difficult to control the molecular weight and the molecular weight distribution as the polymerisation was initiated with oxygen and/or peroxides.

Ethylene-based copolymers produced using metallocene catalysts were introduced to the marketplace over a decade ago, first by Exxon Chemical Company followed closely by The Dow Chemical Company. These copolymers had densities of at most 0.910 g/cm³. Very low density polyethylene (VLDPE) resins and ultra-low density polyethylene (ULDPE) resins produced by conventional methods were available on the market such as for examples Union Carbide's Flexomer® and Mitsui's Tafmer® product lines. Metallocene-based ethylene copolymers were however sufficiently novel to capture novel end-use applications.

Ethylene-based copolymers having densities higher than 0.910 g/cm³ were progressively introduced on the market such as for example Dow's octene-based linear low density polyethylene (LLDPE) and Exxon's butene- and hexene-based LLDPE. As production of metallocene-based LLDPE (mLLDPE) was ramped up in the mid- to late 90s, the premium commanded by these products decreased compared to conventionally produced LLDPE. The mechanical, physical, and optical properties of mLLDPE were far superior to those of conventional LLDPE and low density polyethylene (LDPE). Its processability on available equipment was however very poor in comparison to that of conventional LDPE. Resin producers and manufacturers of processing equipment, especially blown-film equipment, worked simultaneously to address the problem of the difficult processability of metallocene-based polyethylene as compared to the very easy processing of classical LDPE.

Polyethylene is an inexpensive material that can be processed and moulded into myriads of shapes with the desired mechanical and optical properties for numerous end uses. It has a useful balance of physical, mechanical, and optical properties, all of which are a function of polymer structure. Polymer structure depends upon the catalyst system and the process technology that were used to produce the polymer.

The properties that have an impact on processability and mechanical properties of polyethylene are:
- molecular weight
- molecular weight distribution
- molecular architecture, specifically branching, both short-chain branching (SCB) and long-chain branching (LCB). For SCB, both the level of SCB as well as the distribution of SCB are important for determining the rheological and end-use properties of the polyethylene resin.

The molecular weight of a polymer has an impact on its hardness, durability or strength. Polymers including polyethylene comprise short chains, long chains, and chain lengths in between, each with a different molecular weight. An average molecular weight can be calculated, but by itself this number is virtually meaningless. It is preferable to characterize polymers in terms of the distribution of the chain lengths and hence in terms of molecular weight distribution. Quantitatively, molecular weight distribution is described by the polydispersity index, PDI. It is the ratio Mw/Mn of the weight average molecular weight Mw to the number average molecular weight Mn.

The MWD of LDPE, conventional LLDPE, and metallocene-based LLDPE differ markedly. The MWD of LDPE is typically broad of from 5 to 15, that of conventional LLDPE ranges between 4 and 6, and that of mLLDPE is of less than 4.

The primary difference between LDPE and conventional or metallocene-based LLDPE is in type degree and distribution of branching, both SCB and LCB.

During the production of LDPE, SCB form via the back-biting mechanism. Mostly ethyl and butyl branches are formed. The short chains are distributed evenly along every chain. Typical SCB density in LDPE is of from 10 to 30 SCB/1000 backbone carbon atoms. The regular SCB distribution results in excellent optical properties and a low melting point.

Type and degree of short-chain branching in linear polyethylene made using coordination catalysts are determined by the type and level of added comonomer. Butene-1, hexene-1, or octene-1 are the usual comonomers, resulting in formation of ethyl, butyl, or hexyl branches, respectively.
Catalyst type determines the distribution of SCB. A conventional LLDPE with a density of 0.918 g/cm³ has an average of 13-15 side branches/1000 carbons that are randomly distributed. There is interchain heterogeneity, meaning some chains have more SCB than others, and intrachain SCB is a function of molecular weight: the higher the molecular weight, the lower the frequency of SCB. As a consequence of the SCB variability, the optical properties are poor.

One of the key features of metallocene catalysts is their ability to incorporate comonomer uniformly both intra- and inter-molecularly. Thus mLLDPE has a uniform comonomer distribution that is independent of molecular weight, resulting in excellent optical properties.

During the production of LDPE long-chain branches (LCB) form via chain transfer. A long-chain free radical can abstract a hydrogen atom from the backbone of a nearby chain, leaving a free radical in the interior of the chain which reacts with nearby ethylene molecules to form a very long branch, sometimes referred to as a T-junction. Sufficient LCB results in formation of a polymer network. Typically there are 15 long-chain branches/1000 carbon atoms in LDPE and 10 to 50 branch points. These branch points function as permanent cross-links, thereby resulting in the high melt strength of LDPE due to frequent polymer-chain entanglements, of great benefit in extrusion processes such as blown film and extrusion coating.

Reactor type also determines the extent of LCB in LDPE. Two types of reactor can be used: autoclave or tubular. In general LDPE produced in an autoclave reactor has a more complex, multi-branched structure than that produced in a tubular reactor. More LCB results in low intrinsic viscosity.

The disadvantage of LLDPE is that there is essentially no LCB in conventional LLDPE and no or very little LCB in mLLDPE. As a consequence, extrusion of LLDPE produced with any type of coordination catalyst is very difficult on equipment designed for extruding LDPE.

The disadvantage of LDPE is that the use of peroxides to initiate the polymerisation of LDPE results in residual contamination within the polymers. The polymers produced did not have optimal transparency and processing properties:
- processing capabilities were reduced by long chain branching;
- crystallinity was reduced by short chain branching formed during polymerisation by the mechanism of backbiting.

There is thus a need to improve the processing capabilities of mLLDPE and thus to prepare resins that would combine the good physical, mechanical and optical properties of single-site catalyst system and the good processability of classical LDPE resins.

To obtain the best balance of mechanical and processing properties, polyolefins must have both a high molecular weight (HMW) component and a low molecular weight (LMW) component. Such polyolefins have either a broad molecular weight distibution (MWD), or a multi-modal molecular weight distribution. There are several methods for the production of polyolefins having a broad or multimodal molecular weight distribution. The individual olefins can be melt blended, or can be formed in separate reactors in series. Use of a dual site catalyst for the production of a bimodal polyolefin resin in a single reactor is also known.

Chromium-based catalysts for use in polyolefin production tend to broaden the molecular weight distribution and can, in some cases, produce bimodal molecular weight distribution, but usually the low molecular part of these resins contains a substantial amount of the co-monomer. Whilst a broadened molecular weight distribution provides acceptable processing properties, a bimodal molecular weight distribution can provide excellent properties.

Ziegler-Natta catalysts are known to be capable of producing bimodal polyethylene using two reactors in series. Typically, in a first reactor, a low molecular weight homopolymer is formed by reaction between hydrogen and ethylene in the presence of the Ziegler-Natta catalyst. It is essential that excess hydrogen be used in this process and, as a result, it is necessary to remove all the hydrogen from the first reactor before the products are passed to the second reactor. In the second reactor, a copolymer of ethylene and hexene is made in order to produce a high molecular weight polyethylene.

Metallocene catalysts are also known in the production of polyolefins. For example, EP-A-0619325 describes a process for preparing polyolefins having a bimodal molecular weight distribution. In this process, a catalyst system that includes two metallocenes is employed. The metallocenes used are, for example, a bis(cyclopentadienyl) zirconium dichloride and an ethylene-bis(indenyl) zirconium dichloride. By using the two different metallocene catalysts in the same reactor, a molecular weight distribution is obtained, which is at least bimodal. As for ZiegleNatta catalysts, it is also possible to use a single metallocene catalyst system in two serially connected loop reactors operated under different polymerising conditions.

A problem with known bimodal polyolefins is that if the individual polyolefin components are too different in molecular weight and density, they may not be as miscible with each other as desired and harsh extrusion conditions or repeated extrusions are necessary which might lead to partial degradation of the final product and/or additional cost. The optimum mechanical and processing properties are thus not achieved in the final polyolefin product.

These polyolefins however do not have the good optical properties of the low density polyethylene resins.

There is thus a need to prepare polymers with controlled molecular weight distribution and controlled long chain branching as well as good optical properties and that do not require severe polymerisation conditions of high temperature and high pressure.

It is an aim of the present invention to prepare a catalyst system that polymerises ethylene or alpha-olefins under mild conditions of temperature and pressure.

It is also an aim of the present invention to prepare a catalyst system that production of polymers with controlled molecular weight distribution.

It is another aim of the present invention to prepare a catalyst system for the production of polymers with controlled long chain branching.

It is a further aim of the present invention to provide a catalyst system for the production of polymers having good optical properties.

it is yet a further aim of the present invention to provide a catalyst system for the production of polymers that are easy to process.

### List of figures.

Figure 1 represents a general bridged tetrahydroindenyl structure.

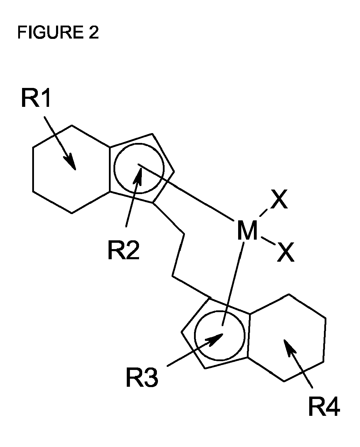

Figure 2 represents the structure of a typical bisindenyl metallocene catalyst component.

Figure 3 represents composite molecular weight distributions wherein several pseudo-indenyl structures are present in various amounts. In Figure 3a the component wherein n=3 is dominant, in figure 3b the component wherein n=2 is dominant, and in Figure 3c, components wherein n= or > 3 are dominant.

Accordingly, the present invention discloses a catalyst component that comprises three or more bridged bisindenyl or pseudo-bisindenyl metallocene components that are structurally different and are represented by formula (I)

R"[Cp (CH₂)₂]₂MQ₂ + R"[Cp (CH₂)₃]₂MQ₂ + R"[Cp (CH₂)₄]₂MQ₂ + .... (I)

wherein Cp represents a cyclopentadienyl ring and wherein the two ends of each (CH₂)ₙ group are attached to two neighbouring positions of the cyclopentadienyl in order to form a ring, R" is a structural bridge between two cyclopentadienyl rings imparting rigidity to the component, M is a metal group 4 of the Periodic Table (Handbook of Chemistry, 76^{th} edition) and each Q is the same or different and may be a hydrocarbyl or hydrocarboxy radical having 1-20 carbon atoms or a halogen.

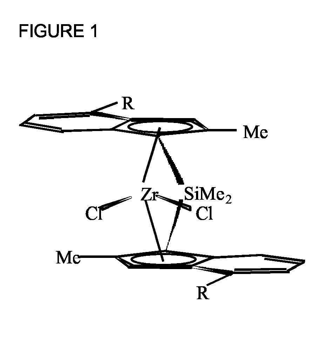

A typical bridged bisindenyl structure is represented in Figure 1.

In this disclosure, the compounds R"[Cp (CH₂)ₙ]₂MQ₂ are called pseudo-bis- or pseudo-bistetrahydro-indenyl components and n is an integer from 2 to 8. They can be prepared as described for example in Polo et al. (in Journal of Organometallic Chemistry, 577, 211-218, 1999.)

Each substituent group on the pseudo-bis- or bistetrahydro-indenyl components may be independently chosen from those of formula XRᵥ in which X is chosen from group 14, oxygen and nitrogen and each R is the same or different and chosen from hydrogen or hydrocarbyl of from 1 to 20 carbon atoms and v+1 is the valence of X. X is preferably C. If the cyclopentadienyl ring is substituted, its substituent groups must not be so bulky as to affect coordination of the olefin monomer to the metal M. Substituents on the cyclopentadienyl ring preferably have R as hydrogen or CH₃.

Although each Cp can have a different substitution pattern, it is preferred that within a [Cp (CH₂)ₙ]₂ unit, both Cp (CH₂)ₙ have the same substitution pattern. More preferably, the substitution pattern is the same for all [Cp (CH₂)ₙ]₂ units, most preferably all units are nsubstituted.

In another embodiment according to the present invention the psendo-indenyl units can all be of general formula R"[Cp(CH₂)ₐ Cp(CH₂)_{b}] MQ₂ wherein a is not equal to b and wherein both a and b are integers from 2 to 8.

Preferably, the bridge R" that is a methylene or ethylene or silyl bridge either substituted or unsubstituted or a diphenyl bridge.

Metal M in each component is independently selected from zirconium, hafnium or titanium. Most preferably all M's are the same and they are zirconium.

Suitable hydrocarbyls for Q include aryl, alkyl, alkenyl, alkylaryl or aryl alkyl. Each Q is preferably halogen.

In an alternative embodiment according to the present invention, the (CH₂)ₙ may be the same or different and the M's are different.

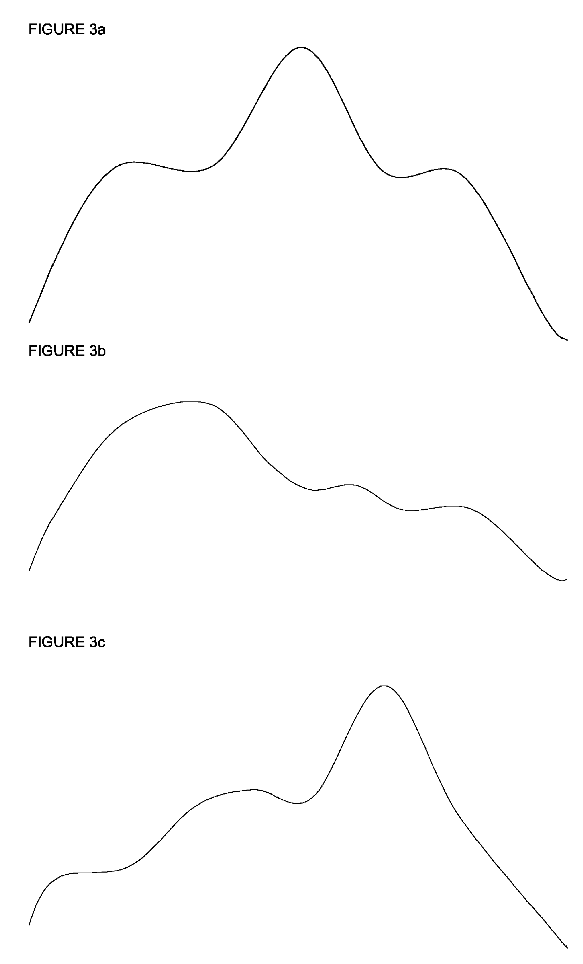

The respective amounts of each metallocene component are not particularly limited and depend upon the desired properties of the final polymers. When good mechanical properties are needed, the high molecular weight component is essential and when good processing is preferred, the low molecular weight component is needed. Typical composite molecular weight distributions are represented in Figure 3a, 3b and 3c. When a good balance of mechanical and processing properties is preferred, all catalyst components are equally represented.

The metallocene catalyst component used in the present invention can be prepared by any known method. A preferred preparation method for preparing the tetrahydroindenyl component is described in J. Org. Chem. 288, 63-67 (1985) or in Polo et al. (reference hereabove).

An active catalyst system is prepared by combining the three or more pseudo-indenyl catalyst components with a suitable activating agent.

The activating agent used to activate the metallocene catalyst component can be any activating agent having an ionising action known for this purpose such as aluminium-containing or boron-containing compounds. The aluminium-containing compounds comprise alumoxane, alkyl aluminium and/or Lewis acid.

The alumoxanes are well known and preferably comprise oligomeric linear and/or cyclic alkyl alumoxanes represented by the formula: 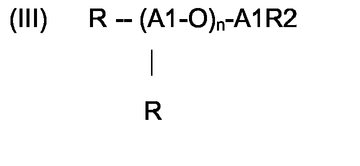 for oligomeric, linear alumoxanes and 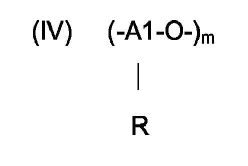 for oligomeric, cyclic alumoxane,
wherein n is 1-40, preferably 10-20, m is 3-40, preferably 3-20 and R is a C₁-C₈ alkyl group and preferably methyl.

Suitable boron-containing cocatalysts may comprise a triphenylcarbenium boronate such as tetrakis-pentafluorophenyl-borato-triphenylcarbenium as described in EP-A-0427696, or those of the general formula [L'-H] + [B Ar₁ Ar₂ X₃ X₄]- as described in EP-A-0277004 (page 6, line 30 to page 7, line 7).

Alternatively, an activating support may be used instead of an activating agent.

The active catalyst system of the present invention is used for the polymerisation of ethylene or alpha-olefins. It is particularly useful for the preparation of polyethylene or isotactic polypropylene.

The present invention also discloses a method for polymerising ethylene or alpha-olefins that comprises the steps of:
a) injecting into a reactor a composite active catalyst system comprising several bridged pseudo-bis- or pseudo-bistetrahydro-indenyl components having different ring patterns and a suitable activating agent or activating support;
b) injecting a monomer and optional comonomer into the reactor;
c) maintaining under polymerisation conditions;
d) retrieving a polymer having a broad molecular weight distribution.

The comonomer can be created in situ by adding an oligomerisation catalyst component.

In a particularly preferred embodiment of the present method, polymerisation takes place in a single reaction zone, under polymerising conditions in which the catalysts producing the polymer components are simultaneously active.

Many known procedures for forming multimodal polyolefins have employed a different reactor for forming each component. The methods of the present invention are particularly advantageous, since they allow for the production of improved olefin polymers from a single reactor. This is because the catalysts employed in the present invention are more effective than known catalysts, particularly when utilised simultaneously in the same reactor. This has two distinct advantages. Firstly, since only a single reactor is required, production costs are reduced. Secondly, since the components are all formed simultaneously, they are much more homogeneously blended than when produced separately.

Although polymerisation in a single reactor is particularly preferred, the catalysts employed in the present invention are still effective in producing the required polyolefin components of a multimodal product even when these components are produced in separate reactors. Accordingly, in some embodiments, separate reactors may be employed for forming some or all of the components, if desired

Each of the three or more pseudo-bisindenyl catalyst component produces a polymer having a narrow molecular weight distribution, each molecular weight distribution being slightly different than the two or more others. The resulting resin thus has a final molecular distribution that is the superposition of three or more narrow molecular weight distributions slightly displaced with respect to one another. The fraction of high molecular weight component in the molecular weight distribution increases with the number n of methylene groups attached to the cyclopentadienyl ring. The final molecular weight distribution is in the range of 5 to 8, preferably of from 6 to 7, whereas each individual component has a polydispersity of from 2.5 to 4.

The polyethylene obtained with the catalyst composition according to the present invention typically have a density ranging from 0.910 to 0.930 g/cm³ and a melt index ranging from 0.1 to 30 dg/min. Density is measured following the method of standard test ASTM 1505 at a temperature of 23 °C and melt index M12 is measured following the method of standard test ASTM D 1238 at a temperature of 190 °C and under a load of 2.16 kg.

Figures 3a, 3b and 3c represent the superposition of molecular weight distributions for a catalyst system comprising three bridged pseudo-bisindenyl components wherein Figure 3a has a ring formed by three methylene groups attached to the cyclopentadienyl, Figure 3b has a ring formed by two methylene groups attached to the cyclopentadienyl, and Figure 3c has a ring formed by four methylene groups attached to the cyclopentadienyl.

The resins of the present invention can be used in the applications of classical LDPE obtained with peroxide.

The important structural attributes of polyethylene include molecular weight, molecular weight distribution, degree and type of branching, comonomer distribution (compositional distribution), and degree of crystallinity.

The physical properties of polyethylene include density, melting temperature, crystallisation temperature, heat-deflection temperature, glass-transition temperature, moisture and gas permeability, and other electrical and thermal properties.

The mechanical properties of polyethylene include tensile properties such as for example strength, modulus, tensile strength at yield, ultimate tensile strength, flexural properties such as strength and modulus, elongation properties such as elongation at yield and elongation at break, tear strength, stiffness, hardness, brittleness, impact resistance, puncture resistance, and environmental stress crack resistance (ESCR).

The optical properties of polyethylene include clarity, haze, gloss, and colour. The rheological properties of polyethylene include melt strength, intrinsic viscosity, shear viscosity, and extensional viscosity.

These properties vary with molecular weight, density, and molecular weight distribution as summarised in Table I.

**TABLE I.**

| | Increases | Decreases |
|---|---|---|
| Increasing Density | stiffness, tensile strength at yield, melting point, hardness, abrasion resistance, chemical resistance, gloss. | ESCR, impact strength, haze, gas permeability. |
| Increasing molecular weight | stiffness, tensile strength at yield, impact strength, hardness, abrasion resistance, chemical resistance, ESCR, melt strength, haze. | gloss, gas permeability. |

As density increases so does crystallinity, so it is the degree of crystallinity that actually determines these properties.

The molecular weight distribution also influences the physical properties of a polyethylene. For example, at equivalent molecular weight, a polyethylene with a narrow MWD is tougher than a polyethylene with a broad MWD. mLLDPE makes therefore a tougher film than a conventional LLDPE having the same molecular weight and density. The MWD has also an effect on the organoleptics of a resin because the low molecular weight components are volatile and extractable.

More importantly, the MWD has an effect on the processability of the resin.

Major polyethylene processing operations include extrusion, injection moulding, blow moulding, and rotational moulding, each requiring different resin properties.
- In extrusion, molten polymer is continuously forced through a shaped die then drawn onto take-off equipment as it cools. Pipes, fibres, blown-film or cast-film, sheets, coating for wire, cables, or paper are extruded in this manner. Extrusion processes require resins with some degree of melt strength.
- In injection moulding, molten polymer is injected at very high pressure into a mould where the polymer solidifies, replicating the shape of the mould. Resins suitable for injection moulding must have low melt viscosity in order for the mould to be filled quickly and completely. Typically, they have a narrow MWD and a high melt index. The melt index is measured using the method of standard test ASTM D 1238 at a temperature of 190 °C for polyethylene and under o load of 2.16 kg for M12 and 21.6 kg for HLMI.
- In blow moulding, thin-walled hollow parts are formed, such as for example bottles or large articles such as drums or asymmetric articles such as automotive fuel tanks. Blow-moulding resins require high melt strength in order to avoid sagging or shearing away during processing. Blow-moulding resins typically have a broad MWD and a low melt index, usually MI2 is less than 1 dg/min and HLMI is less than 10 dg/min.
- In rotational moulding, finely divided polymer powder is poured into a mould that is then heated to over 300°C and slowly rotated. As the mould rotates the polymer melts and coats the inside walls of the mould uniformly. Rotational moulding is a low-shear process suitable for producing large, irregularly-shaped objects.

LDPE and LLDPE resins are used mainly to prepare various types of film. The LDPE-like resins such as prepared in the present invention are principally used in film applications. Other applications may include paper extrusion-coating.

The LDPE-like resins according to the present invention have an improved rheological behaviour when compared to conventional LDPE. Improvements include for example the good bubble stability of LDPE plus the draw down property of LLDPE without concomitant melt fracture.

Conventional LDPE has a very broad MWD, wherein the lower molecular weight fraction enhances processability whereas the higher molecular weight fraction enhances mechanical properties. In addition the extensive LCB present in LDPE lends it very large melt strength. Branching, both SCB and LCB, lowers the crystallinity of solid LDPE which, combined with its homogeneous inter- and intramolecular branching frequency, makes it a very clear resin. Thus LDPE is noted for its easy processing, particularly in blown film and extrusion coating, and excellent optical properties. The low crystallinity of LDPE means however mediocre puncture resistance, tensile strength, and tear strength. In addition, in processing, the draw down of LDPE is poor. It is thus difficult to down-gauge LDPE film and thus to prepare thin final articles. The LDPE-like resins prepared according to the present invention do not exhibit these drawbacks: they have excellent down-gauging capability and good tensile and tear strength as well as excellent resistance to puncture.

## Claims

1. A catalyst component comprising three or more bridged pseudo-bis- or pseudo- bistetrahydro-indenyl metallocene components that are structurally slightly different and are represented by formula I
R"[Cp (CH₂)ₙ₁]₂MQ₂ + R"[Cp (CH₂)ₙ₂]₂MQ₂ + R"[Cp (CH₂)ₙ₃]₂MQ₂ +.... (I)
wherein Cp represents a cyclopentadienyl ring, wherein the two ends of each (CH₂)ₙᵢ group are attached to two neighbouring positions of the cyclopentadienyl in order to form a ring, wherein R" is a structural bridge between two cyclopentadienyl rings imparting rigidity to the component, wherein each M is selected independently from a metal group 4 of the Periodic Table (Handbook of Chemistry, 76^{th} edition), wherein each Q is the same or different and may be a hydrocarbyl or hydrocarboxy radical having 1-20 carbon atoms or a halogen and wherein each ni is an integer from 2 to 8 and all ni's are different.

2. The catalyst component of claim 1 wherein all M are the same.

3. The catalyst component according to claim 1 or claim 2 wherein the substituents on each [Cp (CH₂)ₙᵢ]₂ group are independently chosen from those of formula XRᵥ in which X is chosen from group 14, oxygen and nitrogen and each R is the same or different and chosen from hydrogen or hydrocarbyl of from 1 to 20 carbon atoms and v+1 is the valence of X.

4. The catalyst component according to any one of claims 1 to 3 wherein the [Cp (CH₂)ₙᵢ]₂ units all have the same substitution pattern.

5. A catalyst system comprising the catalyst component of any one of claims 1 to 4 and an activating agent or an activating support.

6. The catalyst system of claim 5 wherein the activating agent is aluminoxane.

7. A method for preparing an active catalyst system comprising the steps of;
a) providing a catalyst component comprising the three or more bridged pseudo-bis- or pseudo-bistetrahydro-indenyl metallocene catalyst components according to any one of claims 1 to 4;
b) providing an activating agent having an ionising action or an activating support.

8. A method for homo- or co-polymerising ethylene or alpha-olefins that comprises the steps of:
a. injecting the active catalyst system of claim 5 or claim 6 into the reactor;
b. injecting a monomer and an optional comonomer into the reactor;
c. maintaining under polymerisation conditions;
d. retrieving a polymer.

9. The method of claim 8 wherein the monomer is ethylene or propylene.

10. A polymer having a molecular weight distribution of from 5 to 8 obtainable by the method of claim 8 or claim 9.

11. Use of the catalyst system of claim 5 or claim 6 to prepare a polymer having good optical and mechanical properties that is easy to process.
